# EUROPÄISCHE PATENTSCHRIFT

(11) **EP 1 419 116 B1**
(45) Veröffentlichungstag und Bekanntmachung des Hinweises auf die Patenterteilung: **26.01.2005**
(21) Anmeldenummer: 02767083.5
(22) Anmeldetag: 05.08.2002
(51) Int. Cl.: C03B 23/13, C03B 23/09, C03B 23/207

(54) **VERFAHREN ZUM HERSTELLEN EINES ELEMENTS MIT EINEM HERMETISCH ABGESCHLOSSENEN LUFTLEEREN RAUM**
METHOD FOR THE PRODUCTION OF AN ELEMENT WITH A HERMETICALLY-SEALED AIR-FREE CHAMBER
PROCEDE DE FABRICATION D'UN ELEMENT COMPORTANT UNE CHAMBRE VIDE D'AIR FERMEE HERMETIQUEMENT

(30) Priorität: 10.08.2001 DE 10138277
(43) Veröffentlichungstag der Anmeldung: 19.05.2004
(73) Patentinhaber: Paradigma Energie- und Umwelttechnik GmbH und Co. KG., 76307 Karlsbad (DE)
(72) Erfinder: BAHR, Georg, Friedrich, 79804 Dogern (DE)
(74) Vertreter: Dimmerling, Heinz, Dipl.-Ing.
(86) Internationale Anmeldenummer: PCT/DE2002/002873
(87) Internationale Veröffentlichungsnummer: WO 2003/016230

(56) Entgegenhaltungen:
- FR-A- 2 299 283
- FR-A- 2 463 901
- FR-A- 2 533 019
- US-A- 4 785 608

## Beschreibung

Die Erfindung betrifft ein Verfahren nach dem Oberbegriff des Anspruchs 1, zum Herstellen eines Elements, welches einen hermetisch abgeschlossenen nahezu luftleeren Raum aufweist, insbesondere zum Herstellen eines doppelwandig ausgebildeten Elements mit einer Innenwand und einer Außenwand, bei dem der hermetisch abgeschlossene nahezu luftleere Raum zwischen der Innenwand und der Außenwand angeordnet ist. Unter luftleerem Raum wird ein evakuierter oder ein mit einem Edelgas befüllter Raum verstanden, das heißt, ein Raum, der keine Luft der Erdatmosphäre mehr enthält.

Ein derartiges Element ist im Stand der Technik in verschiedenen Ausführungen bekannt. Die bekannteste Ausführungsform dürfte die sogenannte Thermosflasche sein. Grundsätzlich ähnlich ausgebildet und insbesondere in jüngster Zeit immer stärker verbreitet sind auch sogenannte Vakuum-Röhrenkollektoren, welche in Solaranlagen verwendet werden.

Bei den bekannten Elementen ist der luftleere Raum regelmäßig als Vakuum ausgebildet. Zur Erzeugung des Vakuums ist bei den bekannten Elementen ein Stutzen vorgesehen, mittels welchem die Luft aus dem Raum gepumpt werden kann. Nachdem die Luft aus dem Raum gepumpt worden ist, wird der Stutzen verschmolzen, so daß ein erneutes Eindringen von Luft in den Raum verhindert wird.

Dadurch, daß die Luft regelmäßig in einem separaten Arbeitsgang aus dem Raum gepumpt werden muß, gestaltet sich die Erzeugung des luftleeren Raums als recht aufwendig. Dies wirkt sich negativ auf die Herstellungskosten aus. Darüber hinaus verbleibt an dem Element immer ein Rest des Stutzens, durch den die Luft aus dem Raum gepumpt worden ist. Dies wirkt sich zum einen nachteilig auf das Aussehen des Elementes aus, und zum anderen besteht dadurch, daß der Stutzen aus dem Element hervorsteht, die Gefahr, daß der Stutzen abbricht, wodurch das Element unbrauchbar wird. Außerdem besteht bei dem hervorstehenden Stutzen die Gefahr, daß man sich an dem Stutzen verletzen kann.

Es ist Aufgabe der Erfindung, ein Verfahren zum Herstellen eines eingangs genannten Elements anzugeben, mittels welchem das Element kostengünstig herstellbar ist, sowie ein Pumpstutzen vermeidbar ist.

Die Lösung dieser Aufgabe ergibt sich aus den Merkmalen des kennzeichnenden Teils des Anspruchs 1. Vorteilhafte Weiterbildungen der Erfindung ergeben sich aus den Unteransprüchen.

Gemäß der Erfindung ist ein Verfahren zum Herstellen eines Elements, welches einen hermetisch abgeschlossenen nahezu luftleeren Raum aufweist, insbesondere zum Herstellen eines doppelwandig ausgebildeten Elementes mit einer Innenwand und einer Außenwand, bei dem der hermetisch abgeschlossene und nahezu luftleere Raum zwischen der Innenwand und der Außenwand angeordnet ist, dadurch gekennzeichnet, daß das Element vor dem hermetischen Verschließen des Raumes in eine nahezu luftleere Umgebung verbracht wird.

Dadurch, daß das Element vor dem hermetischen Verschließen des Raumes in eine nahezu luftleere Umgebung verbracht wird, läßt sich der Raum auf einfache Weise verschließen. Denn, da sich das Element in einem luftleeren Raum befindet, ist es vor dem hermetischen Verschließen des Raumes nicht erforderlich, den Raum luftleer zu pumpen. Hierdurch kann auf den Pumpstutzen verzichtet werden. Da es nicht mehr erforderlich ist, einen Pumpstutzen vorzusehen, kann der Raum auf einfache und verschiedene Weise verschlossen werden. Dies wirkt sich sehr günstig auf die Herstellungskosten aus.

In vorteilhafter Weise werden die zur Herstellung des luftleeren Raumes zu verbindenden Enden erhitzt und durch eine entsprechende Formgebung miteinander verbunden. Die Formgebung kann beispielsweise durch Pressen, Schleudern, Ziehen, Walzen beziehungsweise Kapillar- und Schwerkräfte erfolgen.

Als besonders vorteilhaft hat sich bei einem doppelwandigen Element herausgestellt, die zur Herstellung des luftleeren Raumes zu verbindenden Enden der Innenwand und der Außenwand zu erhitzen und in eine Form einzufügen. Durch die Erhitzung der zu verbindenden Enden werden diese weich, so daß sie in der Form miteinander verschmelzen. Die Form ist in vorteilhafter Weise dabei so ausgebildet, daß die Schmelzstelle nach dem Erstarren der Enden eine gewünschte Form hat. Ist die gewünschte Form gerundet, muß die Form einen entsprechenden Radius aufweisen.

Besonders vorteilhaft ist auch, wenn die Form eine Nut aufweist, von der wenigstens eine Wandung teilweise in einem Winkel von etwa 3 Grad zur Mittenebene verläuft. Hierdurch wird eine besonders saubere und glatte Verbindungsstelle erreicht.

Als besonders vorteilhaft hat sich des weiteren herausgestellt, das Element vor dem hermetischen Verschließen des Raumes in eine Kammer einzubringen, welche nach dem Einbringen des Elements evakuiert wird. Hierdurch ist in dem luftleeren Raum nach dem hermetischen Verschließen ein Vakuum vorhanden.

Allgemein läßt sich sagen, daß in einem als Vakuumkammer ausbildeten Raum beziehungsweise in einem Vakuumofen beispielsweise Glas zunächst ausgeheizt, dann auf die jeweilig erforderliche Verarbeitungs- beziehungsweise Schmelztemperatur erhitzt, geschmolzen und miteinander verschmolzen wird. Das Schmelzen, Verschmelzen von Glas-Glas-, Glas-Metall- oder Glas-Keramikkörper erfolgt derart, daß das Element einen evakuierten Raum einschließt und abdichtet.

So kann bei einer Borosilikatglas-Röhrenverschmelzung beispielsweise wie folgt vorgegangen werden. Die zur Schmelze erforderliche Energie wird durch Induktionserwärmung, beispielsweise durch einen Hochfrequenzgenerator der Leistungsklasse 10 bis 20 KW bereitgestellt. Die zum Prozeß benötigten Hauptkomponenten sind ein Hochfrequenzgenerator, bestehend aus einem Netzteil und Oszillatorteil, ein Schwingkreis, Induktor und ein Heizelement beziehungsweise Wärmekonzentrator. Der erfindungsgemäße Prozeß findet in einer Vakuumkammer beziehungsweise in einem Vakuumkammersystem statt.

Angeschlossene Vakuumpumpen erzeugen den erforderlichen Unterdruck in der Vakuumkammer, wodurch sich die Verarbeitungstemperatur des Glases geringfügig absenkt. Mittels der Induktionsspule wird das in der Vakuumkammer befindliche Heizelement aus beispielsweise Graphit oder Zirkonium erhitzt. Die im Feld der mit hochfrequentem Strom durchflossenen Spule befindlichen Graphit-Zirkonium- beziehungsweise Metallteile erhitzen sich und geben Wärme an das Glas ab. Die Erwärmung mittels Induktion erlaubt es, Wärme gezielt und exakt dosiert in das Heizelement einzubringen. Durch die Wärmestrahlung des glühenden Heizelements beziehungsweise Wärmekonzentrators wird das zu schmelzende Glas an der gewollten Stelle auf seine jeweilige Verarbeitungstemperatur gebracht. Der anschließende Formprozeß des viskosen Glases kann durch separate Formwerkzeuge erfolgen. Er kann aber auch direkt, durch ein entsprechend geformtes Heizelement und gezielten Wärmeeinsatz erfolgen. Schädliche Niederschläge durch Verbrennungsgase auf der Glasoberfläche treten nicht auf.

Es ist auch möglich, das Glas sowohl im Aufheiz- als auch im Formgebungsprozeß in direkten Kontakt mit dem Heizelement zu bringen. Der Energieeintrag in das Glas erfolgt dann zusätzlich durch Wärmeleitung.

Sowohl der Aufheiz- als auch der Formgebungsprozeß können sowohl in einer als auch in mehreren Arbeitsstufen erfolgen. Gegebenenfalls erforderliche Formwerkzeuge können aus den herkömmlichen Metallen, Legierungen, Graphit oder anderen geeigneten Materialien bestehen.

Statt in dem hermetisch abgeschlossenen luftleeren Raum ein Vakuum auszubilden, kann der luftleere Raum gasbefüllt ausgebildet sein. Hierbei wird die Kammer statt sie zu evakuieren mit einem Gas, insbesondere einem wärmeisolierenden oder schalldämmenden Gas, befüllt. Vorteilhaft hierbei ist es, die Kammer vor der Befüllung mit dem Gas zu evakuieren, damit die aufgrund der durch die Ausheizung bewirkten Entgasung vorhandenen Moleküle aus der Kammer entfernt werden. Als Gas haben sich beispielsweise Argon, Xenon und Krypton als besonders vorteilhaft herausgestellt.

Der Schmelz- und/oder Formprozeß in der Kammer bewirkt letztlich das Schließen und Abdichten der jeweiligen Glas-Glas-, Glas-Metall- oder Glas-Keramikkörper unter Einschluß des jeweils zuvor in der Kammer eingestellten Vakuums beziehungsweise unter Einschluß einer zuvor eingestellten und gewollten Gaszusammensetzung.

Die abgedichteten Glas-Glas-, Glas-Metall- oder Glas-Keramikkörper werden der Schmelz- und/oder Formvorrichtung entnommen und innerhalb oder außerhalb der Vakuumkammer thermisch entspannt.

Als besonders vorteilhaft hat sich auch eine Ausführungsform der Erfindung herausgestellt, bei der die Form beheizbar ist. Hierbei ist es insbesondere vorteilhaft, wenn die Form aus einem Material besteht, dessen Schmelzpunkt deutlich über der Verarbeitungstemperatur des Materials liegt, aus dem die zu verbindenden Enden des Elements bestehen. Hierdurch kann die Form auf eine Temperatur erhitzt werden, bei der die zu verbindenden Enden verarbeitet werden können, ohne daß es die Form beeinträchtigt.

Besonders vorteilhaft ist es, wenn die Form aus Graphit besteht. Hierdurch läßt sie sich zum einen auf einfache Weise herstellen. Zum anderen läßt sich die Form aus Graphit auf einfache Weise mittels einer Induktionsspule beheizen. Die Beheizung der Form mittels einer Induktionsspule bringt den Vorteil, daß beim Beheizen der Form keine Verschmutzungen entstehen. Darüber hinaus läßt sich bei einer mittels einer Induktionsspule beheizten Graphitform die Wärme sehr gezielt an den Bereich heranbringen, an dem sie benötigt wird. Dies kann beispielsweise durch eine besondere geometrische Ausgestaltung der Graphitform geschehen oder durch eine besondere Anordnung der Induktionsspule.

Statt mittels einer Induktionsspule kann die Form auch auf andere Art und Weise beheizt werden. So kann die Form beispielsweise mittels Wärmestrahlung wie beispielsweise mittels eines Lasers erwärmt werden. Des weiteren ist es möglich, die Wärmezufuhr durch ein Plasma zu bewirken. Auch kann eine Wärmezufuhr durch eine elektrische Mikrowelle erfolgen. Die Form kann auch dadurch erhitzt werden, daß ihr elektrischer Widerstand ausgenutzt wird, das heißt, daß die Form so ausgebildet ist, daß durch sie ein elektrischer Strom geschickt werden kann, mittels dem die Form erhitzt wird.

Wenngleich eine beheizbare Form auch sehr große Vorteile hat, so läßt sich das erfindungsgemäße Verfahren jedoch auch in der Weise durchführen, daß die zu verbindenden Enden zuerst erhitzt werden und, nachdem sie ihre Schmelztemperatur erreicht haben, in eine Form eingebracht werden. Die Erhitzung der Enden kann auf beliebige Weise geschehen. So können die Enden beispielsweise ebenfalls mittels einer Induktionsspule oder mittels eines Lasers erwärmt werden beziehungsweise kann die Wärmezufuhr durch ein Plasma bewirkt werden oder durch eine elektrische Mikrowelle erfolgen.

Bei Glas-Metall-Körpem kann die Wärmezufuhr insbesondere in den metallischen Teil durch die oben beschriebenen Maßnahmen erfolgen.

Werden die zu verbindenden Enden durch eine erhitzte Form aufgeheizt, geschieht die Wärmezufuhr in die zu erhitzenden Enden auch mittels Wärmeleitung, da die zu verbindenden Enden mit der Form in Kontakt stehen. Dies wirkt sich besonders günstig auf die Zeit aus, die zum Erhitzen der zu verbindenden Enden benötigt wird.

Als sehr vorteilhaft hat sich eine Ausführungsform der Erfindung herausgestellt, bei der die zu verbindenden Enden und die Form während des Verbindens der beiden Enden eine Relativbewegung zueinander ausführen. Hierdurch wird in vorteilhafter Weise erreicht, daß sich die in die zu verbindenden Enden eingeleitete Wärme sehr gut verteilt. Dies wirkt sich besonders gut auf die Qualität der Verbindung aus.

Die Relativbewegung kann beispielsweise dadurch realisiert werden, daß bei zylinderförmigen Elementen beziehungsweise kreisförmig angeordneten zu verbindenden Enden die Form oder das Element rotiert. Sind die zu verbindenden Enden gerade ausgebildet, könnte die Form oder das Element auf einem Schlitten angeordnet sein.

Wird die Form mittels einer Induktionsspule erhitzt, ist es sehr vorteilhaft, die Induktionsspule vor dem Verschmelzen der beiden zu verbindenden Enden abzuschalten. Denn es hat sich herausgestellt, daß es sich sehr günstig auf die Qualität der Verbindungsstelle auswirkt, wenn die zu verbindenden Enden des Elements, insbesondere wenn es aus einem Borosilikatglas besteht, bei Erreichen des Schmelzpunktes nicht mehr dem Einfluß der Induktionsspule ausgesetzt sind. Das heißt, es findet keine Hochfrequenz-Einkopplung in das Glas mehr statt. In vorteilhafter Weise hat die Form daher eine derart große Masse, daß sie soviel Wärmeenergie speichern kann, daß die innere Wand und die äußere Wand des Elements nach dem Abschalten der Induktionsspule ohne weitere Wärmezufuhr miteinander verschmolzen werden können.

Als besonders vorteilhaft hat sich auch eine Ausführungsform der Erfindung herausgestellt, bei der die Verbindung der inneren Wand und der äußeren Wand mit Hilfe eines Lots geschieht. Als Lot können in Abhängigkeit des Materials der zu verbindenden Enden Glaslote oder metallische Lote wie beispielsweise Hartlot verwendet werden. Durch die Verwendung von Lot kann in vorteilhafter Weise eine Verbindung der zu verbindenden Enden bei einer Temperatur geschehen, bei der beispielsweise im Glas noch keine Spannungen auftreten. Hierdurch entfällt eine ansonsten nach dem Verschmelzen der beiden zu verbindenden Enden erforderliche Temperung. Dies wirkt sich sehr günstig auf die Herstellungszeit und damit die Herstellungskosten aus.

Mittels des erfindungsgemäßen Verfahrens kann insbesondere Glas wie beispielsweise Hohlglas, Flachglas, Glaslot, Einschmelz- und Übergangsglas unabhängig von der Glasart, der Glaszusammensetzung und -konsistenz (zum Beispiel Pulver) im Vakuum oder unter einer bestimmten Gaszusammensetzung geschmolzen, getrennt sowie miteinander verschmolzen werden, so daß die behandelten Körper wie beispielsweise Flachglasscheiben, Glas-Metalloder Glas-Keramikkörper einen evakuierten oder mit Gas gefüllten Raum einschließen und abdichten. Bei der Verbindung von Elementen können Lote zum Einsatz kommen. So können insbesondere bei Glas-Metallkörpern metallische Lote verwendet werden.

Der Vorteil des erfindungsgemäßen Verfahrens ist insbesondere die effiziente Herstellung von Vakuumgefäßen wie beispielsweise Vakuum-Röhrenkollektoren, Dewaregefäßen, Vakuum-Flachglasscheiben oder andere Vakuum-Glasapparaturen und Glasgeräte, ohne den herkömmlichen, separaten und aufwendigen und damit kostenintensiven Ausheiz- und Evakuierungsprozeß unter Atmosphärendruck.

Erforderliche Produktionsprozesse, wie sie beispielsweise bei der Herstellung von Dewaregefäßen, Destillationsapparaturen (Kolonnen), Vakuum-Flach- und Röhrenkollektoren, Parabolrinnenreceivern, Beleuchtungskörpern, Isoliergläsem und ähnlichen Elementen erforderlich sind, können mittels des erfindungsgemäßen Verfahrens in einem zusammenhängenden Vakuumkammersystem durchgeführt werden, was eine erhebliche Prozeßvereinfachung und vergleichsweise günstige Produktionsbedingungen insbesondere bei einer Massenproduktion mit sich bringt.

So ist es besonders vorteilhaft, daß wenigstens eine Seite der Innenwand oder der Außenwand in der nahezu luftleeren Umgebung vor dem Verschmelzen beschichtet werden kann. Hierdurch erspart man sich, daß zunächst ein Vakuum zur Beschichtung der betreffenden Seite hergestellt werden muß, und nach dem Zusammenbau des Elements beziehungsweise nach dem Ausbilden und vor dem Verschließen des Raumes erneut ein Vakuum in dem Raum hergestellt werden muß. Dies ist insbesondere bei solchen Elementen der Fall, bei denen in dem Raum ein Hochvakuum wie beispielsweise 5 × 10⁻⁵ Millibar hergestellt werden muß. Die Beschichtung der Wand kann mittels eines Plasmas erfolgen.

Des weiteren hat sich als sehr vorteilhaft herausgestellt, das Element in der nahezu luftleeren Umgebung vor dem Beschichten zu reinigen. Hierdurch kann das Element beispielsweise mittels eines Plasmas gereinigt werden. Neben einer Vereinfachung des Reinigungsprozesses wird dadurch auch ein höherer Grad an Reinheit erreicht.

Weitere Einzelheiten, Merkmale und Vorteile der vorliegenden Erfindung ergeben sich aus der nachfolgenden Beschreibung eines besonderen Ausführungsbeispiels unter Bezugnahme auf die Zeichnung.

Es zeigt
- Figur 1: eine schematische Darstellung eines Vakuum-Röhrenkollektors vor dem Einführen der noch zu verbindenden Enden in eine Form im Schnitt,
- Figur 2: die bereits verbundenen Enden des in Fig. 1 dargestellten Röhrenkollektors in vergrößerter Darstellung,
- Figur 3: die in Fig. 1 dargestellte Form in vergrößerter Darstellung,
- Figur 4: eine Ausführungsform eines Glas-Metall-Vakuum-Röhrenkollektors mit seinen noch zu verbindenden Enden in einem Heizelement,
- Figur 5: eine Ausführungsform eines Parabolrinnenreceivers mit seinen noch zu verbindenden Enden in einem Heizelement,
- Figur 5a: eine Abwandlung des in Figur 5 dargestellten Parabolrinnenreceivers.
- Figur 6: eine zweite Ausführungsform eines nach dem erfindungsgemäßen Verfahren hergestellten Glas-Metall-Vakuum-Röhrenkollektors,
- Figur 7: eine dritte Ausführungsform eines Vakuum-Röhrenkollektors mit seinem noch abzuschmelzenden Pumpstengel in einem Heizelement,
- Figur 8: eine Detaildarstellung des in Fig. 7 dargestellten Vakuum-Röhrenkollektors mit bereits verschmolzenem Pumpstengel,
- Figur 9: eine erste Vorrichtung zur Herstellung einer Flachglasscheibe nach dem erfindungsgemäßen Verfahren,
- Figur 10: eine zweite Vorrichtung zur Herstellung einer Flachglasscheibe nach dem erfindungsgemäßen Verfahren , und
- Figur 11: eine schematische Blockdarstellung eines Herstellungsverfahrens eines Vakuum-Röhrenkollektors gemäß Figur 1.

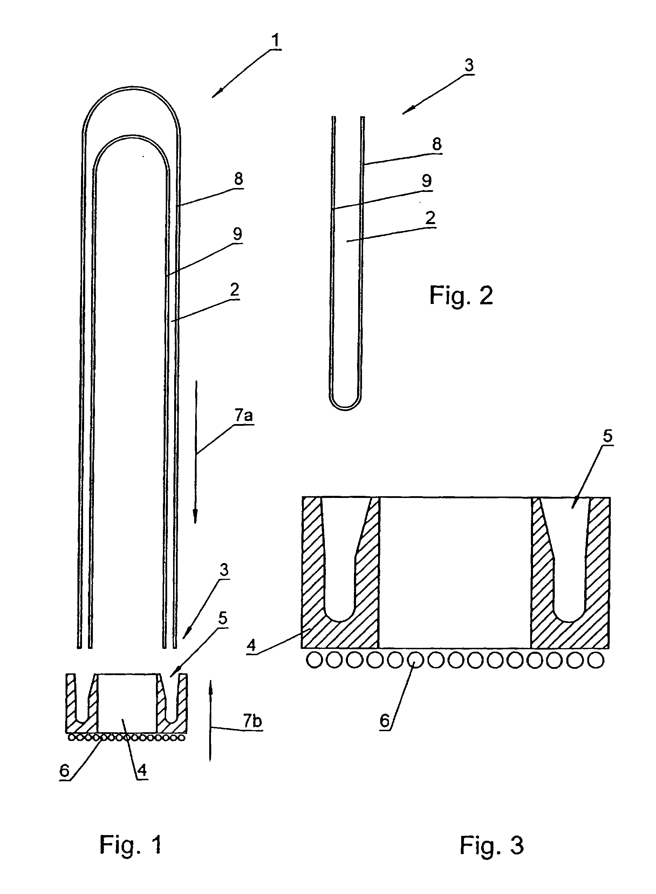

Wie den Figuren 1 bis 3 entnommen werden kann, besteht ein Vakuum-Röhren-Kollektor 1 aus einer äußeren Röhre 8 und einer inneren Röhre 9. Die beiden Röhren 8, 9 sind einseitig verschlossen, das heißt, nach Art eines Reagenzglases ausgebildet. Die innere Röhre 9 ist koaxial in der äußeren Röhre 8 angeordnet, wobei die offenen Enden der Röhren 8, 9 gleich lang sind. Sie können aber auch ungleich lang sein. So kann beispielsweise das Ende der inneren Röhre 9 länger sein als das Ende der äußeren Röhre 8. Der zwischen der inneren Röhre 9 und der äußeren Röhre 8 vorhandene Raum 2 soll als Vakuum ausgebildet sein.

Hierzu wird das aus der äußeren Röhre 8 und der inneren Röhre 9 bestehende Gebilde in eine luftdichte Kammer gebracht. Die Kammer ist aus Gründen der Vereinfachung in der Zeichnung nicht dargestellt. In der Kammer ist eine zylinderförmige Form 4, welche an einer Stirnseite eine Ringnut 5 aufweist, angeordnet. Die Form 4 besteht aus Graphit und ist mit einer Induktionsspule 6 versehen. Mittels der Induktionsspule 6 läßt sich die Form 4 erhitzen. Die Induktionsspule 6 ist so ausgebildet, daß die Form 4 insbesondere im unteren Bereich der Ringnut 5 stark erhitzt wird. Nachdem das Gebilde in die Kammer gebracht worden ist, wird in der Kammer ein Vakuum hergestellt. Unter Vakuum wird ein Druck verstanden, der zumindest geringer ist als der Atmosphärendruck.

Nachdem die Form 4 erhitzt ist, wird das aus der äußeren Röhre 8 und der inneren Röhre 9 bestehende Gebilde in Richtung des Pfeiles 7a abgesenkt, so daß die entsprechenden Enden 3 der beiden Röhren 8, 9 in die Ringnut 5 eindringen. In der Ringnut 5 erhitzen sich die Enden 3, so daß sie miteinander verschmelzen. Der zwischen der äußeren Röhre 8 und der inneren Röhre 9 bestehende Raum 2 ist somit hermetisch abgeschlossen.

Da das hermetische Verschließen des Raumes 2 in einem Vakuum geschehen ist, herrscht nach dem Verschließen des Raumes 2 innerhalb des Raumes 2 ebenfalls ein Vakuum.

Die miteinander verbundenen Enden der äußeren Röhre 8 und der inneren Röhre 9 sind in Figur 2 vergrößert dargestellt.

Wie insbesondere der Figur 3 entnommen werden kann, verlaufen die Wände der Ringnut 5 leicht konisch, wobei die innere Wandung der Ringnut 5 in ihrem oberen Bereich stärker abgeschrägt ist. Hierdurch wird das Einführen der Enden 3 der Röhren 8, 9 in die Ringnut 5 erleichtert. Durch den konischen Verlauf der Wände der Ringnut 5 wird eine besonders spannungsfreie Verbindung erreicht. Die Wände weisen eine Steigung von etwa 1 zu 20 auf.

Der Nutgrund der Ringnut 5 ist so ausgebildet, daß die miteinander verbundenen Enden 3 der äußeren Röhre 8 und der inneren Röhre 9 nachdem sie miteinander verbunden sind abgerundet sind beziehungsweise einen Radius aufweisen. Statt daß das aus der äußeren Röhre 8 und der inneren Röhre 9 bestehende Gebilde in Richtung des Pfeils 7a abgesenkt wird, läßt sich auch die Form 4 in Richtung des Pfeils 7b anheben. Es ist auch möglich, daß das aus der äußeren Röhre 8 und der inneren Röhre 9 bestehende Gebilde in Richtung des Pfeils 7a abgesenkt und die Form 4 gleichzeitig in Richtung des Pfeils 7b angehoben wird. Um glasseitig eine gleichmäßige Wärmeverteilung zu erreichen, rotiert entweder die Graphitform 4, 5 oder das aus der äußeren Röhre 8 und der inneren Röhre 9 bestehende Gebilde.

Soll der luftleere Raum 2 nicht als Vakuum ausgebildet sein, sondern mit einem Gas befüllt sein, muß in der Kammer, in der die Enden 3 der äußeren Röhre 8 und der inneren Röhre 9 miteinander verbunden werden, nicht ein Vakuum aufweisen, sondern mit dem Gas befüllt sein. Als Gas kommen insbesondere Gase und/oder Gasverbindungen in Frage, die schall- und/oder wärmedämmend beziehungsweise -isolierend wirken.

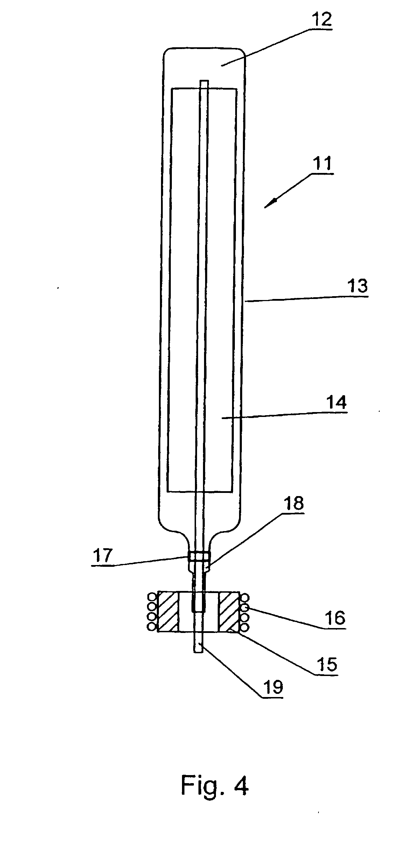

Wie Figur 4 entnommen werden kann, kann ein Vakuum-Röhrenkollektor 11 auch so ausgebildet sein, daß in einem Glaskolben 13 ein Metallrohr 19 angeordnet ist. Das Metallrohr 19, welches beispielsweise aus Kupfer bestehen kann, ist mit einem als Flügel ausgebildeten Metall-Absorber 14 verbunden. Der Glaskolben 13 ist an seinem in der Figur dargestellten oberen Ende luftdicht verschlossen. An seinem unteren Ende weist der Glaskolben 13 eine Verjüngung auf. Im Bereich der Verjüngung ist der Glaskolben 13 mit einem Metallelement 18 verschmolzen. Die Verbindungsstelle 17 der Verbindung des Glaskolbens 13 mit dem Metallelement 18 ist ebenfalls luftdicht.

Das Metallelement 18 verjüngt sich soweit, daß der Innendurchmesser des Metallelements 18 nur geringfügig größer als der Außendurchmesser des Metallrohres 19 ist.

Zur Herstellung eines Vakuums im Innenraum 12 des Glaskolbens 13 wird die zuvor beschriebene Anordnung in eine Kammer gebracht, in welcher ein mittels einer Induktionsspule 16 beheizbares Heizelement 15 angeordnet ist. Die Verbindungsstelle des Metallrohres 19 mit dem Metallelement 18 muß sich innerhalb des Heizelements 15 befinden. Nachdem die Anordnung in die Kammer eingebracht wurde, wird die Luft aus der Kammer gepumpt, so daß in der Kammer ein Vakuum entsteht. Nachdem in der Kammer ein Vakuum ausgebildet ist, wird Strom durch die Induktionsspule 16 geschickt, so daß sich das Heizelement 15 erhitzt.

Hierdurch erhitzt sich ein zuvor ringförmig auf die Verbindungsstelle zwischen dem Metallrohr 19 und dem Metallelement 18 aufgebrachtes Lot, so daß das Metallrohr 19 mit dem Metallelement 18 verlötet wird. Hierdurch wird der Innenraum 12 des Glaskolbens 13 hermetisch abgeschlossen. Da vor dem hermetischen Verschließen des Innenraums 12 des Glaskolbens 13 in dem Innenraum 12 ein Vakuum herrschte, ist in dem hermetisch abgeschlossenen Innenraum 12 des Glaskolbens 13 nach dem Verlöten des Rohres 19 mit dem Metallelement 18 ein Vakuum ausgebildet.

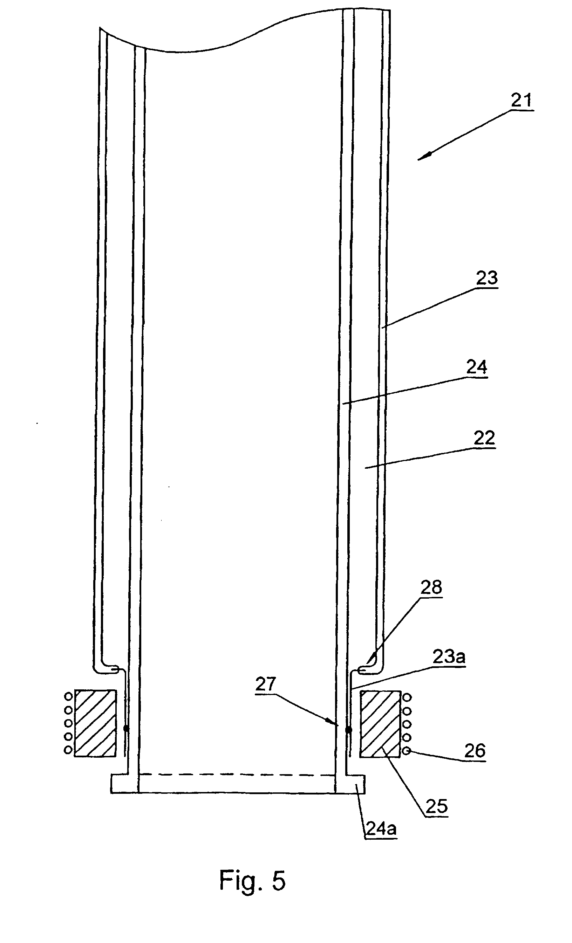

Wie Figur 5 entnommen werden kann, kann ein Parabolrinnenreceiver 21 auch so ausgebildet sein, daß in einem Glasrohr 23 ein Metallrohr 24 angeordnet ist. Das Glasrohr 23 ist an seinen Enden mit einem zylinderförmigen Element 23a aus Metall luftdicht verbunden. Das Metallelement 23a ist mit dem Glasrohr 23 verschmolzen. Im Bereich der Verbindungsstelle 28 des Metallelements 23a mit dem Glasrohr 23 verringert sich der Durchmesser. Der Durchmesser des Metallelements 23a ist somit geringer als der Durchmesser des Glasrohres 23. Er ist geringfügig größer als der Durchmesser des Metallrohres 24.

Das Metallrohr 24 erstreckt sich durch das Metallelement 23a und das Glasrohr 23 bis zum anderen Endes des Glasrohres 23. Die beiden Enden des Parabolrinnenreceivers 21 sind im wesentlichen gleich ausgebildet. Das andere Ende des Parabolrinnenreceivers 21 weist jedoch noch Elemente auf, mittels der die unterschiedliche Wärmeausdehnung des Glasrohres 23 und des Metallrohrs 24 auf Grund ihrer unterschiedlichen Wärmeausdehnungskoeff-izienten ausgeglichen werden kann.

Der Raum 22 zwischen dem Glasrohr 23 und dem Metallrohr 24 soll als Vakuum ausgebildet sein. Zur Herstellung des Vakuums wird die Anordnung in eine Kammer gebracht, in welcher ein mittels einer Induktionsspule 26 beheizbares Heizelement 25 angeordnet ist. Nach dem Einbringen der Anordnung wird die Kammer evakuiert. Dann wird das Metallrohr 24 in der Kammer in die aus dem Glasrohr 23 und den auf beiden Enden des Glasrohres 23 angeordneten Metallelementen 23a bestehende Anordnung eingeführt. Nachdem sich das Metallrohr 24 in der Anordnung befindet, wird die Gesamtanordnung so in das Heizelement 25 eingebracht, daß die Berührungsstellen des Metallrohres 24 mit den Metallelementen 23a aufgeheizt werden kann. Hierdurch kann ein zuvor aufgebrachtes Lot 27 erhitzt werden, wodurch das Metallrohr 24 luftdicht mit den Metallelementen 23a verlötet wird.

Da in dem Raum 22 vor dem hermetischen Verschließen ein Vakuum ausgebildet war, bleibt das Vakuum in dem Raum 22 auch nach Entfemen des Röhrenkollektors 21 aus der evakuierten Kammer erhalten.

Das Metallrohr 24 weist an seinen Stirnseiten jeweils einen Flansch 24a auf. Hierdurch lassen sich mehrere Parabolrinnenreceiver 21 miteinander verbinden.

Bei der in Figur 5a dargestellten Abwandlung des zuvor beschriebenen Parabolrinnenreceivers 21 weist das Metallrohr 24 an seinen Stimseiten statt eines Flansches ein Gewinde 24b auf, mittels dem sich mehrere Parabolrinnenreceiver 21 miteinander verbinden lassen. Des weiteren weist das Glasrohr 23 an seinem Ende kein Metallelement mehr auf. Statt dessen ist an dem Metallrohr 24 ein Zusatzelement 29 angeordnet, welches einerseits luftdicht mit dem Metallrohr 24 verbunden ist, und sich andererseits bis unter das Glasrohr 23 erstreckt. An der Stelle, an der sich das Zusatzelement 29 unter dem Glasrohr 23 befindet, ist das mittels der Induktionsspule 26 beheizbare Heizelement 25 angeordnet. Das Heizelement 25 kann wie alle anderen beschriebenen Heizelemente als Wärmekonzentrator ausgebildet sein.

Durch Erhitzen der betreffenden Stelle des Glasrohrs 23 beziehungsweise des Zusatzelements 29 verschmilzt das Glasrohr 23 mit dem Zusatzelement 29, so daß sich eine luftdichte Glas-Metallverbindung ergibt. Im übrigen ist der in Figur 5a dargestellte Parabolrinnenreceiver 21 wie der in Figur 5 dargestellte Parabolrinnenreceiver 21 ausgebildet.

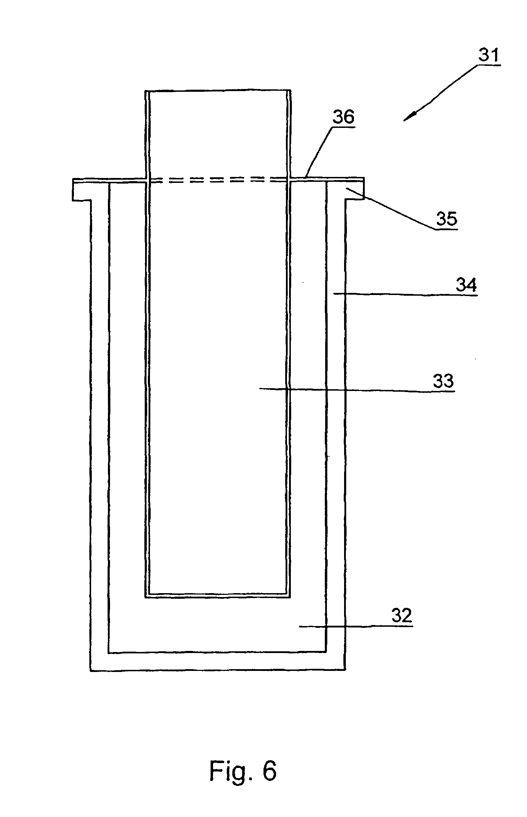

Wie Figur 6 entnommen werden kann, kann ein Vakuum-Röhrenkollektor 31 so ausgebildet sein, daß in einem einseitig offenen Glaskolben 34 ein einseitig offener Metallkolben 33 angeordnet ist. Der Glaskolben 34 weist an seiner offenen Seite einen Flansch 35 auf. Der Metallkolben 33 weist ebenfalls an seiner offenen Seite einen Flansch 36 auf. Der Flansch 36 ist luftdicht mit dem Metallkolben 33 verbunden. Der Raum 32 zwischen dem Glaskolben 34 und dem Metallkolben 33 soll als Vakuum ausgebildet sein.

Hierzu wird die Anordnung in eine luftdichte Kammer gebracht. Nach dem Einbringen der Anordnung in die luftdichte Kammer wird die Kammer evakuiert. Nachdem die Kammer evakuiert ist, wird der mit dem Metallkolben 33 verbundene Flansch 36 unter hohem Druck auf den Flansch 35 des Glaskolbens 34 aufgepreßt. Hierdurch ergibt sich durch Thermokompression eine luftdichte Verbindung, so daß der Raum 32 hermetisch abgeschlossen ist. Zwischen dem Flansch 36 und dem Glasflansch 35 kann beispielsweise ein Lot oder eine Übertragungsfolie angeordnet sein. Es ist auch möglich, den Metallflansch 36 zunächst alleine ohne Metallkolben 33 mit dem Glasflansch 35 zu verbinden. In diesem Fall wird die Verbindung des Metallkolbens 33 mit dem Metallflansch 36 wie in Figur 4 durchgeführt.

Da vor dem hermetischen Verschließen des Raumes 32 in dem Raum 32 ein Vakuum herrschte, ist in dem hermetisch abgeschlossenen Raum 32 nach der Verbindung der beiden Flansche 36, 35 ein Vakuum ausgebildet.

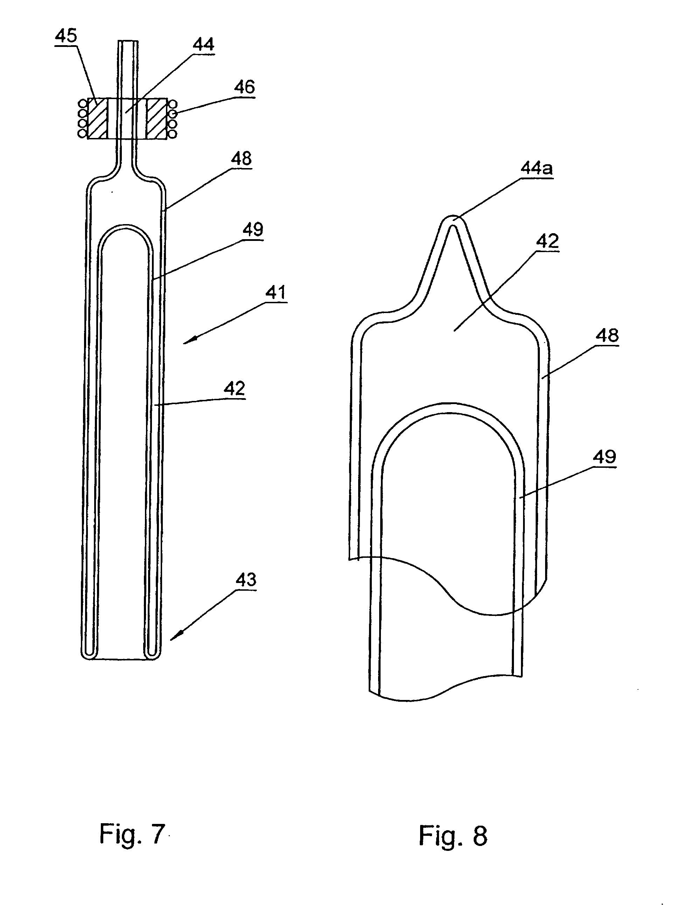

Wie den Figuren 7 und 8 entnommen werden kann, kann ein Vakuum-Röhrenkollektor 41, wie er bereits in den Figuren 1 und 2 dargestellt wurde, auch so hergestellt werden, daß die Enden 43 unter Atmosphärendruck miteinander verbunden werden, und an der äußeren Röhre 48 an ihrem dem Ende 43 gegenüberliegenden Ende einen Stutzen 44 ausgebildet wird.

Durch den Stutzen 44 kann die sich in dem Raum 42 zwischen der äußeren Röhre 48 und der inneren Röhre 49 befindliche Luft entweichen, wenn die Kammer, in die die Anordnung zuvor gebracht wurde, evakuiert wird. Nach dem Evakuieren der Kammer wird das Heizelement 45 durch die Induktionsspule 46 erhitzt, so daß der Stutzen 44 schmilzt. Durch das Schmelzen des Stutzens 44 wird der zwischen der äußeren Röhre 48 und der inneren Röhre 49 befindliche Raum 42 luftdicht verschlossen. Der verschmolzene Stutzen 44 ist in Figur 8 dargestellt und mit dem Bezugszeichen 44a versehen.

Da das hermetische Verschließen des Raumes 42 in einem Vakuum geschehen ist, herrscht nach dem Verschließen des Raumes 42 innerhalb des Raumes 42 ebenfalls ein Vakuum.

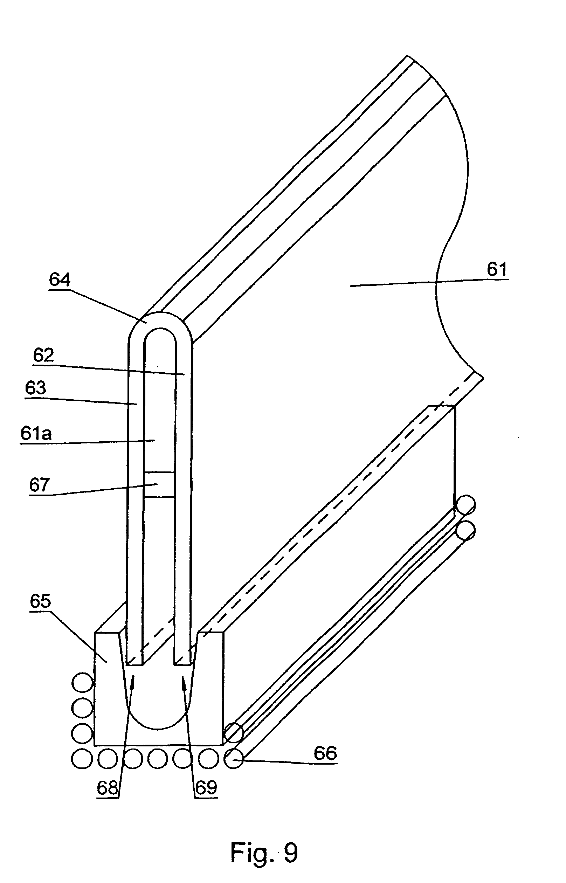

Wie Figur 9 entnommen werden kann, kann eine Flachglasscheibe 61, welche doppelwandig ausgebildet ist und in ihrem Inneren ein Vakuum aufweist, dadurch hergestellt werden, daß sie in eine Kammer verbracht wird, welche evakuiert werden kann. In der Kammer ist ein als U-förmige Schiene ausgebildetes Heizelement 65 angeordnet, welches durch eine Induktionsspule 66 erhitzt werden kann. Der Nutgrund der U-förmigen Schiene 65 weist einen Radius auf.

Vor dem Einbringen in die Kammer werden die beiden Wände 62, 63 der doppelwandigen Scheibe 61 an einer Seite 64 luftdicht miteinander verbunden. Dies kann auch so geschehen, daß eine einwandige Scheibe in erhitztem Zustand umgebogen wird, wodurch sich die Verbindung 64 ergibt.

Zwischen den beiden Wänden 62, 63 der doppelwandigen Scheibe 61 ist ein Abstandshalter 67 angeordnet. Hierdurch wird erreicht, daß sich die Wände 62, 63 der doppelwandigen Scheibe 61 bei einem zwischen den Wänden 62, 63 ausgebildeten Vakuum unter Atmosphärendruck nicht verbiegen.

Die beiden nicht miteinander verbundenen Enden 68, 69 der doppelwandigen Scheibe 61 werden in das U-förmige Heizelement 65 eingeführt. Hierdurch werden sie erhitzt, wodurch sie miteinander verschmelzen.

Das Heizelement 65 kann sich über die gesamte Länge der doppelwandigen Scheibe 61 erstrecken. Es kann aber auch kleiner als die doppelwandige Scheibe 61 sein, so daß die doppelwandige Scheibe 61 durch das Heizelement 65 geschoben werden muß.

Bei der in Figur 9 gewählten Darstellung ist ein Schnitt durch die doppelwandige Scheibe 61 und das Heizelement 65 gezeigt. Das in der Figur nicht dargestellte vordere Ende beziehungsweise hintere Ende der doppelwandigen Scheibe 61 ist selbstverständlich ebenfalls luftdicht verschlossen. Somit ist der zwischen den beiden Wänden 62, 63 der doppelwandigen Scheibe 61 ausgebildete Raum 61 a nach dem Verschmelzen der beiden Enden 68, 69 hermetisch abgeschlossen.

Da das hermetische Verschließen des Raumes 61 a in einem Vakuum geschehen ist, herrscht nach dem Verschließen des Raumes 61a innerhalb des Raumes 61a ebenfalls ein Vakuum.

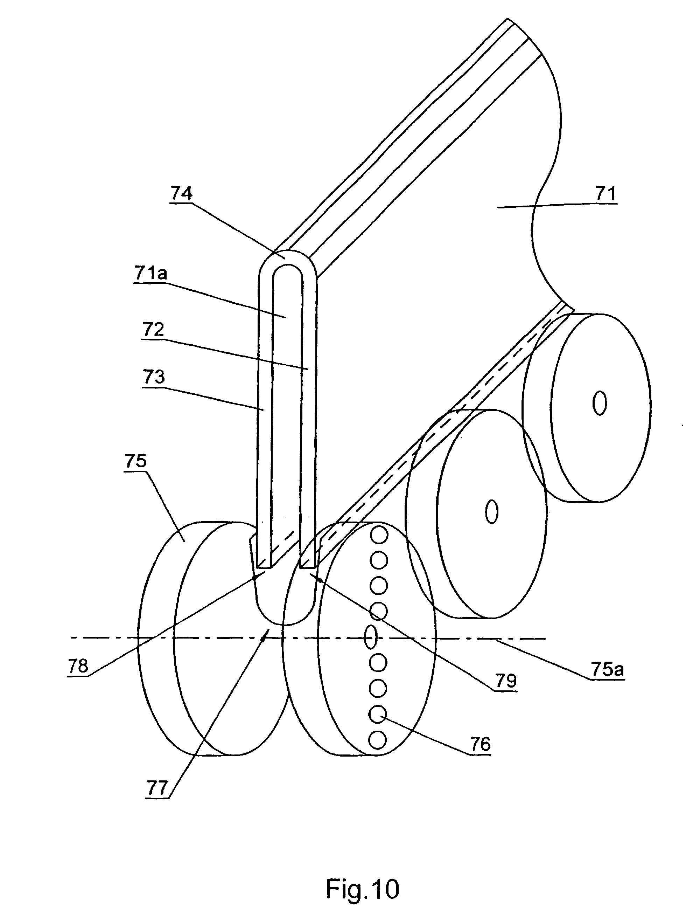

In Figur 10 ist eine weitere Vorrichtung dargestellt, mittels der eine doppelwandige Scheibe 71 hergestellt werden kann. Statt der U-förmigen Schiene werden die Enden 78, 79 der doppelwandigen Scheibe 71 durch ein aus mehreren Rollen bestehendes Heizelement 75 geführt. Die Rollen weisen Einschnürungen 77 auf, welche im Schnitt etwa dieselbe Form haben, wie die Nut des U-förmigen Heizelements 65 aus Figur 9. Die Induktionsspule 76 ist an die Form der Walzen angepaßt und hat einen schneckenförmigen Verlauf. Die Rollen 75 drehen sich um eine Achse 75a, so daß sich die doppelwandige Scheibe 71 sehr leicht durch das Heizelement bewegen läßt. Ansonsten funktioniert das Heizelement 75 genauso wie das Heizelement 65 aus Figur 9.

Da der Raum 71 a zwischen den beiden Wänden der doppelwandigen Scheibe 71 nicht als Vakuum ausgebildet sein soll, sondem mit einem Gas gefüllt sein soll, kann auf einen Abstandshalter verzichtet werden. Die Kammer, in der die Heizelemente 75 angeordnet sind, und in die die doppelwandige Scheibe 71 eingebracht wird, muß jedoch nicht evakuiert werden, sondern mit dem gewünschten Gas befüllt werden. Um die durch die aufgrund der Ausheizung entstehenden Ausgasung auftretenden Moleküle aus dem Raum 71 a zwischen den beiden Wänden zu entfernen muß in dem Raum 71 a vor dem Befüllen mit Gas jedoch zuvor ein Vakuum hergestellt werden. Ansonsten entspricht der Herstellungsvorgang der doppelwandigen Scheibe 71 dem Herstellungsvorgang der in Figur 9 gezeigten doppelwandigen Scheibe 61.

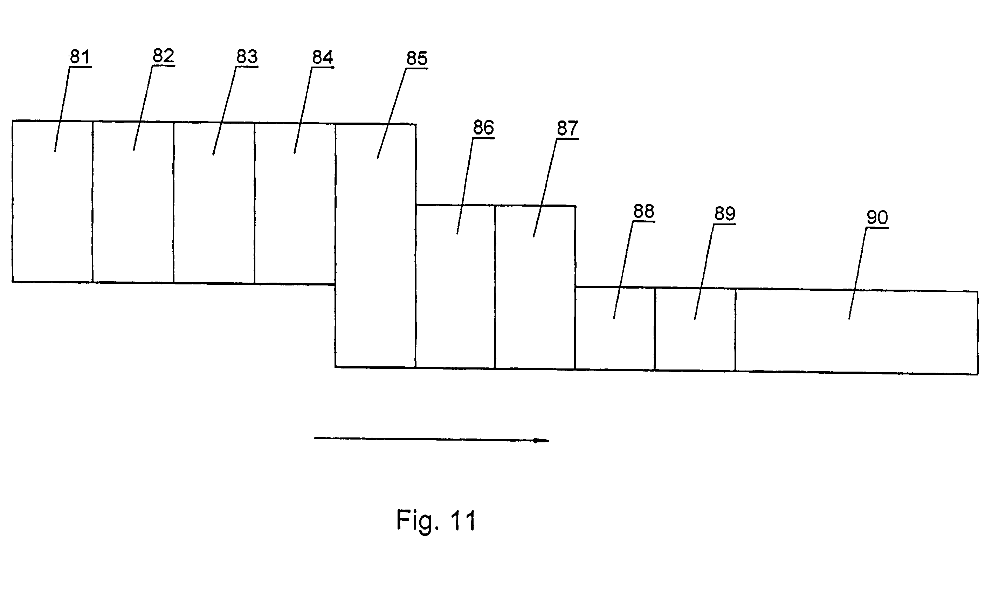

Wie Figur 11 entnommen werden kann, werden in einer ersten Station 81 ein beidseitig offenes Glasrohr mit dem Durchmesser der inneren Röhre des in Figur 1 dargestellten Vakuum-Röhrenkollektors und ein beidseitig offenes Glasrohr mit dem Durchmesser der äußeren Röhre des in Figur 1 dargestellten Vakuum-Röhren-kollektors zur Herstellung eines in Figur 1 dargestellten Vakuum-Röhrenkollektors bereitgestellt. Unter Atmosphärendruck wird in einer zweiten Station 82 an jedem Glasrohr an einer Seite ein Rundboden angeformt, so daß einseitig geschlossene Röhren ähnlich einem Reagenzglas entstehen. In einer dritten Station 83 wird auf die kleinere Röhre ein sogenannter Getter aufgebracht und beide Röhren auf eine Temperatur von etwa 150 bis 350 Grad Celsius erhitzt.

In einer vierten Station 84, welche als Schleuse dient, wird die Umgebung der Röhren evakuiert, bis zu einem Druck von etwa 10⁻² Millibar. In einer fünften Station 85 wird der Umgebungsdruck weiter abgesenkt, bis er etwa 10⁻⁵ Millibar beträgt. In der fünften Station 85 werden die beiden Röhren mittels eines Plasmas bei einer Temperatur von 8000 Grad Celsius gereinigt.

Unter Aufrechterhaltung des Vakuums werden die beiden Röhren in eine sechste Station 86 verbracht, in der sie beschichtet werden. Das kleinere Rohr erhält auf seiner äußeren Fläche eine Absorberbeschichtung. Das größere Rohr erhält auf seiner Innenseite eine Antireflektiv-Beschichtung.

Unter Aufrechterhaltung des Vakuums von 10⁻⁵ Millibar werden die beiden Röhren in eine siebte Station 87 verbracht. In der siebten Station 87 werden die beiden Röhren so ineinander gesteckt, daß sich die Ränder der beiden offenen Enden der Röhren gegenüberstehen. In der siebten Station 87 werden die beiden Enden der Röhren auf etwa 1250 Grad Celsius erhitzt, so daß sie miteinander verschmelzen. Hierdurch ist der zwischen den beiden Röhren bestehende Raum hermetisch abgeschlossen.

Nach dem Verschmelzen wird das aus den beiden Röhren bestehende Gebilde in eine achte Station 88 verbracht, welche als Schleuse dient und in welcher der Druck erhöht wird. In einer neunten Station 89 wird der Druck weiter erhöht, bis er wieder dem Atmosphärendruck entspricht, so daß das Gebilde aus dem Prozeß genommen werden kann und einer in einer weiteren Station 90 stattfindenden Montage zugeführt werden kann.

## Patentansprüche

1. Verfahren zum Herstellen eines Elements (1), welches einen hermetisch abgeschlossenen nahezu luftleeren Raum (2) aufweist, insbesondere zum Herstellen eines doppelwandig ausgebildeten Elementes (1) mit einer Innenwand (9) und einer Außenwand (8), bei dem der hermetisch abgeschlossene und nahezu luftleere Raum (2) zwischen der Innenwand (9) und der Außenwand (8) angeordnet ist,
**dadurch gekennzeichnet,**
**daß** das Element (1) vor dem hermetischen Verschließen des Raumes (2) in eine nahezu luftleere Umgebung verbracht wird.

2. Verfahren nach Anspruch 1,
**dadurch gekennzeichnet,**
**daß** die luftleere Umgebung ein Vakuum ist.

3. Verfahren nach Anspruch 1,
**dadurch gekennzeichnet,**
**daß** die luftleere Umgebung aus einem Gas besteht.

4. Verfahren nach einem der Ansprüche 1 bis 3,
**dadurch gekennzeichnet,**
**daß** die zur Herstellung des luftleeren Raumes (2) zu verbindenden Enden (3) erhitzt und miteinander verbunden werden.

5. Verfahren nach einem der Ansprüche 1 bis 4,
**dadurch gekennzeichnet,**
**daß** die zur Herstellung des luftleeren Raumes (2) zu verbindenden Enden (3) zur Verbindung in eine Form (4, 5) eingeführt werden.

6. Verfahren nach Anspruch 5,
**dadurch gekennzeichnet,**
**daß** die Form (4, 5) eine Nut (5) aufweist, von der wenigstens eine Wandung (5a) teilweise in einem Winkel von etwa 3 Grad zur Mittenebene verläuft.

7. Verfahren nach Anspruch 5 oder 6,
**dadurch gekennzeichnet,**
**daß** die Form (4, 5) beheizbar ist.

8. Verfahren nach einem der Ansprüche 5 bis 7,
**dadurch gekennzeichnet,**
**daß** die Form (4, 5) aus einem Material besteht, dessen Schmelzpunkt deutlich über der Verarbeitungstemperatur des Materials liegt, aus dem die zu verbindenden Enden (3) des Elements (1) bestehen.

9. Verfahren nach einem der Ansprüche 5 bis 8,
**dadurch gekennzeichnet,**
**daß** die Form (4, 5) aus Graphit besteht.

10. Verfahren nach einem der Ansprüche 5 bis 9,
**dadurch gekennzeichnet,**
**daß** die zu verbindenden Enden (3) und die Form (4, 5) während des Verbindens der beiden Enden (3) eine Relativbewegung zueinander ausführen.

11. Verfahren nach einem der Ansprüche 1 bis 10,
**dadurch gekennzeichnet,**
**daß** die zu verbindenden Enden (3) oder die Form (4, 5) mittels Wärmestrahlung erhitzt werden.

12. Verfahren nach einem der Ansprüche 1 bis 11,
**dadurch gekennzeichnet,**
**daß** die zu verbindenden Enden (3) oder die Form (4, 5) mittels eines Plasmas erhitzt werden.

13. Verfahren nach einem der Ansprüche 1 bis 10,
**dadurch gekennzeichnet,**
**daß** die zu verbindenden Enden (3) oder die Form (4, 5) mittels einer Induktionsspule (6) erhitzt werden.

14. Verfahren nach Anspruch 13,
**dadurch gekennzeichnet,**
**daß** die Induktionsspule (6) vor dem Verschmelzen der zu verbindenden Enden (3) abgeschaltet wird.

15. Verfahren nach einem der Ansprüche 1 bis 14,
**dadurch gekennzeichnet,**
**daß** die Verbindung der zu verbindenden Enden (3) mit Hilfe eines Lots geschieht.

16. Verfahren nach einem der Ansprüche 1 bis 15,
**dadurch gekennzeichnet,**
**daß** wenigstens eine Seite der Innenwand (9) oder der Außenwand (8) in der nahezu luftleeren Umgebung vor dem Verschmelzen beschichtet werden.

17. Verfahren nach Anspruch 16,
**dadurch gekennzeichnet,**
**daß** das Element (1) in der nahezu luftleeren Umgebung vor dem Beschichten gereinigt wird.

## Claims

1. Method for the production of an element (1) featuring a hermetically sealed, almost evacuated space (2), in particular for the production of a double-walled element (1) with an inner wall (9) and an outer wall (8), wherein the hermetically sealed, almost evacuated space (2) is located between the inner wall (9) and the outer wall (8),
**characterised in that**
the element (1) is brought into an almost evacuated environment before the space (2) is hermetically sealed.

2. Method according to claim 1,
**characterised in that**
the evacuated environment is a vacuum.

3. Method according to claim 1,
**characterised in that**
the evacuated environment consists of a gas.

4. Method according to any of claims 1 to 3,
**characterised in that**
the ends (3) which have to be joined to produce the evacuated space (2) are heated and joined to one another.

5. Method according to any of claims 1 to 4,
**characterised in that**
the ends (3) which have to be joined to produce the evacuated space (2) are introduced into a mould (4, 5) for joining.

6. Method according to claim 5,
**characterised in that**
the mould (4, 5) features a groove (5), at least one wall (5a) of which partially extends at an angle of approximately 3 degrees to the central plane.

7. Method according to claim 5 or 6,
**characterised in that**
the mould (4, 5) can be heated.

8. Method according to any of claims 5 to 7,
**characterised in that**
the mould (4, 5) is made of a material with a melting point significantly above the processing temperature of the material of which the ends (3) of the element (1) which have to be joined are made.

9. Method according to any of claims 5 to 8,
**characterised in that**
the mould (4, 5) is made of graphite.

10. Method according to any of claims 5 to 9,
**characterised in that**
the ends (3) which have to be joined and the mould (4, 5) move relative to one another while the two ends (3) are joined.

11. Method according to any of claims 1 to 10,
**characterised in that**
the ends (3) which have to be joined or the mould (4, 5) are/is heated by means of thermal radiation.

12. Method according to any of claims 1 to 11,
**characterised in that**
the ends (3) which have to be joined or the mould (4, 5) are heated by means of a plasma.

13. Method according to any of claims 1 to 10,
**characterised in that**
the ends (3) which have to be joined or the mould (4, 5) are heated by means of an induction coil (6).

14. Method according to claim 13,
**characterised in that**
the induction coil (6) is switched off before the ends (3) which have to be joined are fused.

15. Method according to any of claims 1 to 14,
**characterised in that**
the ends (3) which have to be joined are joined with the aid of a solder.

16. Method according to any of claims 1 to 15,
**characterised in that**
at least one side of the inner wall (9) or the outer wall (8) is coated in the almost evacuated environment prior to fusing.

17. Method according to claim 16,
**characterised in that**
the element (1) is cleaned in the almost evacuated environment prior to coating.

## Revendications

1. Procédé de fabrication d'un élément (1) qui présente une chambre (2) pratiquement exempte d'air et hermétiquement fermée, notamment de fabrication d'un élément (1) réalisé à double paroi avec une paroi intérieure (9) et une paroi extérieure (8), dans lequel la chambre (2) pratiquement exempte d'air et hermétiquement fermée est disposée entre la paroi intérieure (9) et la paroi extérieure (8),
**caractérisé en ce que** l'élément (1) est, avant la fermeture hermétique de la chambre (2), amené dans un environnement pratiquement exempt d'air.

2. Procédé selon la revendication 1, **caractérisé en ce que** l'environnement exempt d'air est un vide.

3. Procédé selon la revendication 1, **caractérisé en ce que** l'environnement exempt d'air est constitué d'un gaz.

4. Procédé selon l'une des revendications 1 à 3, **caractérisé en ce que** les extrémités (3) à assembler pour fabriquer la chambre (2) exempte d'air sont chauffées et assemblées entre elles.

5. Procédé selon l'une des revendications 1 à 4, **caractérisé en ce que** les extrémités (3) à assembler pour fabriquer la chambre (2) exempte d'air sont introduites pour l'assemblage dans un moule (4, 5).

6. Procédé selon la revendication 5, **caractérisé en ce que** le moule (4, 5) présente une rainure (5) à partir de laquelle au moins une paroi (5a) s'étend partiellement sous un angle d'environ 3 degrés par rapport au plan médian.

7. Procédé selon la revendication 5 ou 6, **caractérisé en ce que** le moule (4, 5) peut être chauffé.

8. Procédé selon l'une des revendications 5 à 7, **caractérisé en ce que** le moule (4, 5) est constitué d'un matériau dont le point de fusion est nettement supérieur à la température de transformation du matériau dont sont constituées les extrémités à assembler (3) de l'élément (1).

9. Procédé selon l'une des revendications 5 à 8, **caractérisé en ce que** le moule (4, 5) est constitué de graphite.

10. Procédé selon l'une des revendications 5 à 9, **caractérisé en ce que** les extrémités à assembler (3) ou le moule (4, 5) accomplissent un mouvement relatif réciproque pendant l'assemblage des deux extrémités (3).

11. Procédé selon l'une des revendications 1 à 10, **caractérisé en ce que** les extrémités à assembler (3) ou le moule (4, 5) sont chauffés par rayonnement thermique.

12. Procédé selon l'une des revendications 1 à 11, **caractérisé en ce que** les extrémités à assembler (3) ou le moule (4, 5) sont chauffés au moyen d'un plasma.

13. Procédé selon l'une des revendications 1 à 10, **caractérisé en ce que** les extrémités à assembler (3) ou le moule (4, 5) sont chauffés au moyen d'une bobine d'induction (6).

14. Procédé selon la revendication 13, **caractérisé en ce que** la bobine d'induction (6) est désactivée avant l'assemblage par fusion des extrémités à assembler (3).

15. Procédé selon l'une des revendications 1 à 14, **caractérisé en ce que** l'assemblage des extrémités à assembler (3) s'effectue à l'aide d'un métal d'apport de brasage.

16. Procédé selon l'une des revendications 1 à 15, **caractérisé en ce qu'**au moins un côté de la paroi intérieure (9) ou de la paroi extérieure (8) est, dans l'environnement pratiquement exempt d'air, revêtu avant l'assemblage par fusion.

17. Procédé selon la revendication 16, **caractérisé en ce que** l'élément (1) est, dans l'environnement pratiquement exempt d'air, nettoyé avant d'être revêtu.
